# EUROPEAN PATENT APPLICATION

(11) **EP 4 787 868 A1**
(43) Date of publication of application: **05.08.2026**
(21) Application number: 25305126.2
(22) Date of filing: 30.01.2025
(51) Int. Cl.: H04N 21/442, G06Q 30/0207, H04N 21/443, H04N 21/45

(54) **ENERGY SAVINGS CREDITS BASED ON DISPLAY DIMMING**

(71) Applicant: InterDigital CE Patent Holdings, SAS, 75017 Paris (FR)
(72) Inventor: BLONDE, Laurent, 35235 THORIGNE-FOUILLARD (FR); DEMARTY, Claire-Helene, 35520 MONTREUIL LE GAST (FR); REDMANN, William, GLENDALE, 91205 (US); AUMONT, Franck, 35770 VERN SUR SEICHE (FR); LE MEUR, Olivier, 35160 TALENSAC (FR); REINHARD, Erik, 35630 HEDE-BAZOUGES (FR)
(74) Representative: Vossius & Partner Patentanwälte Rechtsanwälte mbB

(57) **Abstract**

Systems, methods, and instrumentalities for an energy savings credit based on display dimming. An example video decoding device may determine that a user of a display has caused the display to dim. The device may calculate an amount of energy saved by dimming the display. The device may determine an energy savings credit based on the amount of energy saved by dimming the display. The device may store the energy savings credit in an account associated with the user.

## Description

### BACKGROUND

The present application is related to reducing individual and/or global carbon footprint(s) by lowering energy the consumption of electronic devices or systems, which may or may not include a display unit(s). Examples of such electronic devices or systems may include, for example, consumer electronics (e.g., TVs, monitors), mobile devices, and personal devices.

### BRIEF SUMMARY

Systems, methods, and instrumentalities are disclosed herein for energy savings credits based on display dimming.

An example device may determine that a user of a display has caused the display to dim. The device may calculate an amount of energy saved by dimming the display. The device may determine an energy savings credit based on the amount of energy saved by dimming the display. The device may store the energy savings credit in an account associated with the user, with a group of people (e.g., a family), or with the device.

The device may determine that the user has lowered a brightness setting of the display. The display may include an automatic dimming system. The device may determine that the automatic dimming system is enabled and the user has reduced ambient light around the display.

The device may monitor user activity that affects brightness of the display. The device may determine a user profile associated with dimming the display based on the user activity that affects the brightness of the display.

The device may determine a default user profile. The device may monitor user activity that affects brightness of the display. The device may modify the default user profile associated with dimming the display based on the user activity that affects the brightness of the display.

The device may receive data associated with user activity that affects brightness of the display. The device may determine an evolution of the user activity that affects brightness of the display. The device may update a user profile based on the evolution of the user activity that affects brightness of the display. The device may also determine an energy savings credit based on the evolution of the user activity that affects the brightness of the display.

The device may receive first data associated with display dimming and room illumination at a first time. The device may receive second data associated with display dimming and room illumination at a second time. The device may compare the first data and the second data to evaluate user energy saving effort. The device may determine the energy savings credit further based on the user energy saving effort.

The device may store historical information indicative of a total amount of energy saved by dimming the display over time. The device may send the historical information to a service provider.

The device may receive a request from the user for reduced energy media content. The device may retrieve the reduced energy media content to present on the display. The reduced energy media content may include metadata indicative of an amount of energy saved by using the reduced energy media content. The device may determine the energy savings credit further based on the amount of energy saved by using the reduced energy media content.

The device may calculate the amount of energy saved by dimming the display by determining a difference between a reference number of watts that would be used by the display while at a first brightness prior to dimming the display and a number of watts used by the display while at a second, lower brightness after dimming the display.

The device may receive a request from the user to exchange the energy savings credit for media content. The device may subtract the energy savings credit from the account associated with the user. The device may grant the user access to the media content.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example technique for determining and storing Saved Watts.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

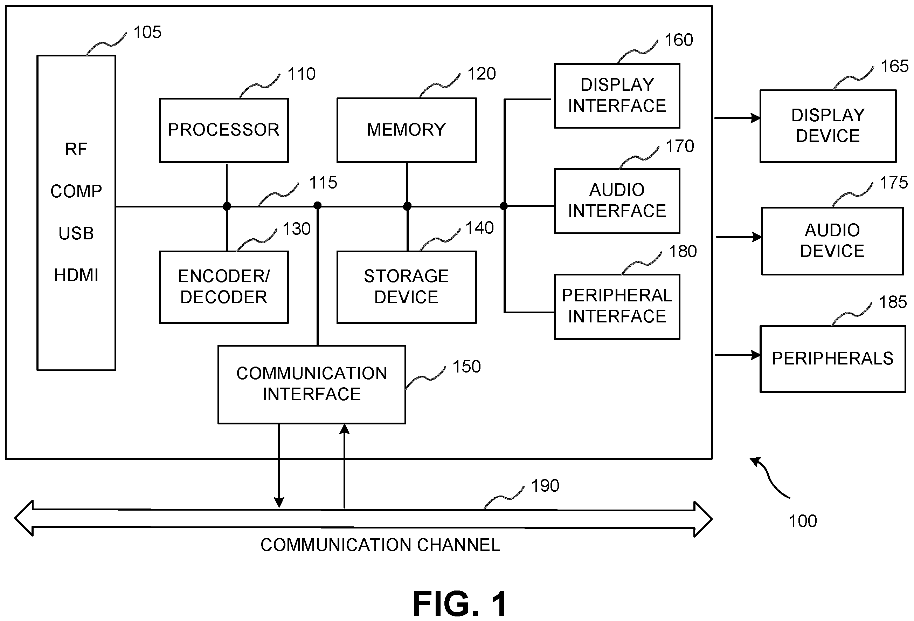

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., over-the-top (OTT) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, 3D, VR or AR glasses, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

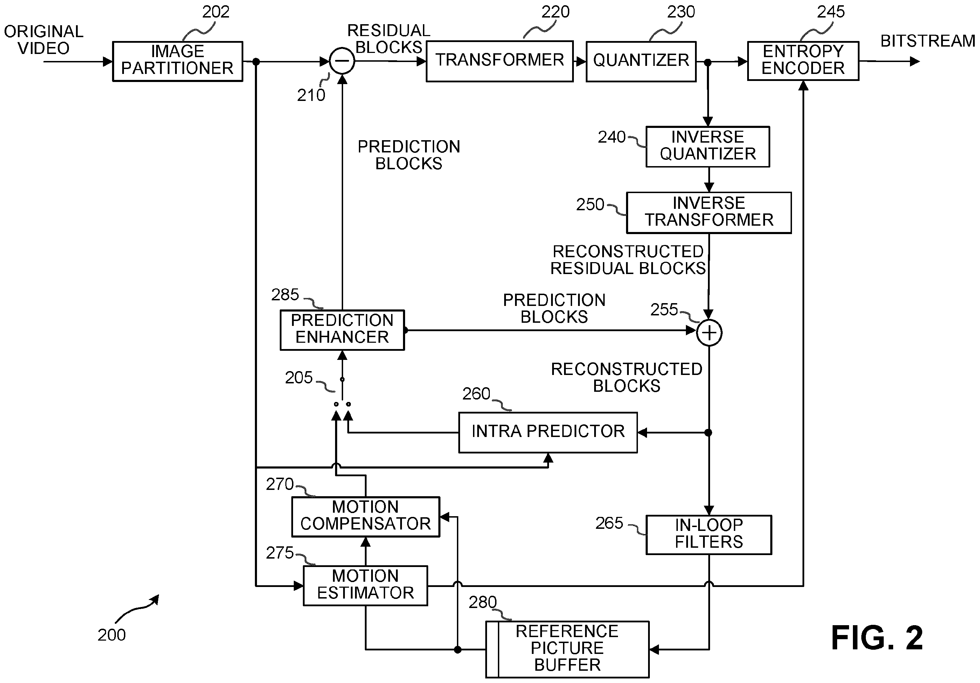

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

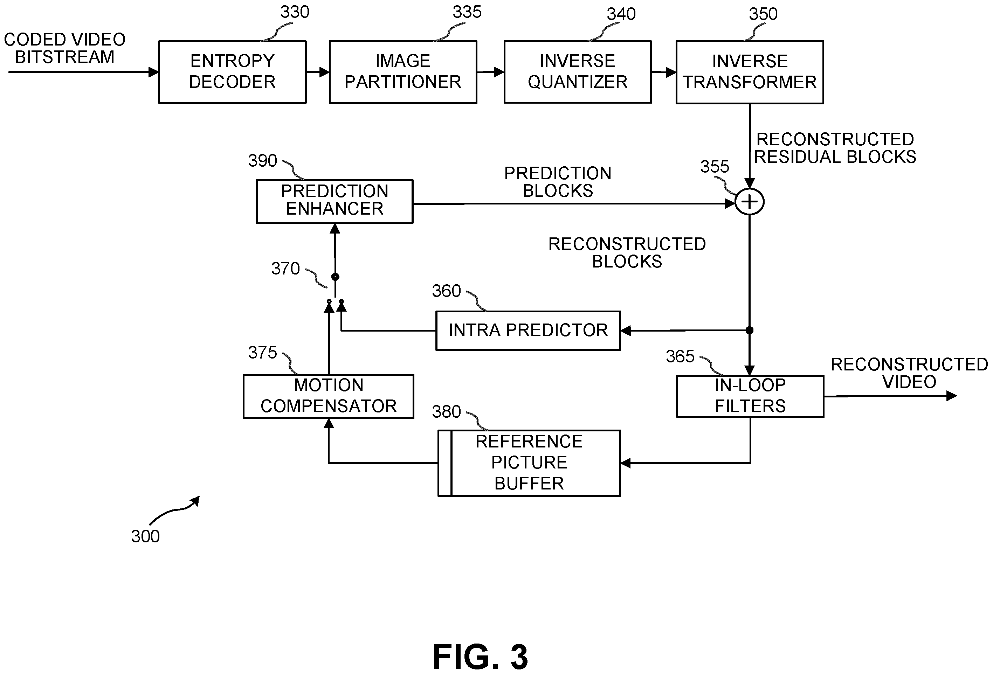

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by *C, Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Feature(s) associated with a global video chain (e.g., production, encoding, transmission, decoding, rendering, etc.) are provided herein.

Feature(s) associated with energy specifications (e.g., requirements) of consumer electronics (CE) and/or mobile devices that process (e.g., manipulate) images and/or videos (e.g., while displaying images and videos on a screen) are provided herein.

Electronic device manufacturers may work to reduce the energy consumption of electronic devices. Reduced energy consumption may reduce (e.g., limit) the environmental impact of such electronic devices. Reduced energy consumption may contribute to the emergence of a sustainable display industry.

For example, the increase in display resolution (e.g., from SD to HD to 4K and beyond) and the introduction of high dynamic range imaging may correspond to an increase in energy specifications (e.g., requirements) of display devices (e.g., which is not consistent with the global need to reduce energy consumption).

Displays may be a source (e.g., an important source) of energy consumption (e.g., displays on battery-powered devices, for example, smartphones, or displays in the global TV/video distribution chain). Other components of the video chain may contribute to the total energy balance in relation to video content. Energy reduction may be implemented in components and/or video chain segments other than displays.

Feature(s) described herein relate to the reduction of the energy specifications (e.g., requirements) of CE and mobile display devices. Feature(s) described herein may preserve or control the quality of experience (e.g., contrast, luminance, temporal smoothness, or color levels for instance) while reducing energy consumption.

Image/video processing algorithms dedicated to energy reduction tasks may realize their tasks with different degrees of Quality of Experience (QoE). For example, algorithms may introduce no defects or no visible defects. Algorithms may create visible defects of different strength or disturbance for the end user.

If no defects or visible defect are introduced (e.g., sometimes referred to as the flawless case), energy reduction may not be balanced with QoE (e.g., because the latter is not modified). This may be the case in video broadcast (e.g., where the image displayed on the user's screen shows as few degradations as possible for a given transmission and display environment). Users may wish to contribute to energy consumption reduction. For example, users may accept some QoE reduction in order to contribute to energy consumption reduction.

A high-quality specification (e.g., an absolutely high-quality requirement) may be used for feature movies or programs with a high artistic value. The QoE level may be evaluated for other program types (e.g., weather forecast, TV games, cartoons, sitcoms, advertisements, etc.) that do not need high (e.g., an absolutely crisp) quality. Reducing quality on selected program types may be possible (e.g., even on broadcast programs), for example, specifically if energy consumption is reduced (e.g., if there is a gain in energy).

If defects are introduced, the system and/or device may balance the energy reduction against QoE (e.g., to make QoE reduction acceptable). Defects (e.g., even if strong) may be acceptable to the end users (e.g., particularly if the defects are associated with explicit and direct benefits, such as energy consumption reduction).

Indicators (e.g., health, money savings, social media indicators) may put the reward on the moral or ethical satisfaction of users or future general benefit aspects. Feature(s) described herein relate to tangible benefits/rewards (e.g., in the form of video upgrades or access to premium content). The benefits/rewards may be supported by an account representative of energy-related efforts of the users.

A currency or an energy savings currency (e.g., sometimes referred to as "Saved Watts") may be defined and credited. For example, users may create an account (e.g., managed by a broadcaster/operator, a subcontractor, or a third party). The currency or the energy savings currency may be a restricted currency (e.g., limited to precise usages, as described herein, or as defined by the currency administrators). Energy savings may be stored on the account depending on a user (or broadcaster/operator) action. If a sufficient amount of energy savings currency is available on the account, the user may use it to obtain an incentive or a reward (e.g., such as the examples given herein).

A currency may be defined as a system of money in common use within a specific environment over time. Currency may also be defined as a medium of exchange. In examples, Saved Watts may be defined as a currency for the media environment (e.g., with its source being energy efficiency improvement in the media environment). Saved Watts may be earned by energy saving efforts. Saved Watts may be used to obtain (e.g., purchase) goods in a media ecosystem. The broadcaster, operator, a subcontractor (e.g., or a third-party working for the broadcaster, operator, or subcontractor) may administer these exchanges. For example, the broadcaster, operator, a subcontractor (e.g., or a third-party working for the broadcaster, operator, or subcontractor) may have the capacity to exchange video clips for Saved Watts as a transaction.

Converting Saved Watts to an actual currency (e.g., Dollars or Euros) may be a choice of the broadcaster/operator. In an example, the broadcaster/operator may give rebates on a subscription fee associated with the account, or a monetary reward.

Some regions (e.g., Europe) may request (e.g., increasingly require) that companies report on their greenhouse gas emissions. For example, reporting standards (e.g., reporting requirements) for corporate sustainability may be implemented. Companies (e.g., companies in Europe, including those based elsewhere with European operations) may report (e.g., be required to report) indirect emissions across their value chain. In examples, opportunities to reduce emissions may be implemented (e.g., via Obligations of the Carbon Inventory).

For example, three Scopes may be defined. A first example scope (e.g., Scope 1) may relate to direct emissions (e.g., notably caused by company facilities and company vehicles). A second example scope (e.g., Scope 2) may relate to indirect emissions due to the purchase of electricity, steam heating and cooling, etc. A third example scope (e.g., Scope 3) may relate to indirect emissions in the upstream and downstream in the company's value chain.

Scope 3 reporting may be broken down (e.g., further broken down) into a number of different classes. For example, the Scope 3 upstream activities may include: purchased goods and services; capital goods; fuel- and energy-related activities not included in scope 1 or scope 2; upstream transportation and distribution; waste generated in operations; business travel; employee commuting; upstream leased assets; and/or the like.

The Scope 3 downstream activities may include: downstream transportation and distribution; processing of sold products; use of sold products; end-of-life treatment of sold products; downstream leased assets; franchises; investments; and/or the like

The Scope 3 categories relevant for broadcasters and media streaming companies may include purchased goods and services (e.g., sometimes referred to as Category 1 or Cat 1) and use of products sold (e.g., sometimes referred to as Category 11 or Cat 11).

In an example, a broadcaster may send out (e.g., transmit) a program through digital terrestrial television (DTV). An end user device (e.g., a television) receiving the program may use energy to display the program. In this case, a television that uses energy to display the program will cause emissions that may be considered 'Scope 3, Cat 11 indirect use phase' for the broadcaster.

If a user decides to reduce this energy using video processing (e.g., as described herein) made available by the broadcaster, the broadcaster may have a gain in its Scope 3 obligations. In this case, the broadcaster may (e.g., in return) reward the user for their effort or annoyance (e.g., due to reduced image quality). For example, the broadcaster may offer an incentive (e.g., such as the examples described herein).

The global carbon footprint may be reduced (e.g., need to be reduced due to climate change). Carbon footprint reduction may be performed in the Consumer Electronics domain (e.g., by reducing the energy consumption of devices).

Companies may identify means to motivate device users to save energy while using their devices (e.g., TVs or equivalent devices). To counterbalance the user's effort to save energy, the users may be compensated. Examples provided herein describe benefits (e.g., practical benefits) and the means to acquire the benefits as compensation for consumer energy saving efforts.

Feature(s) described herein may be used to create a means of exchange (e.g., sometimes referred to as an exchange means, a conversion path, or a currency). The means of exchange may be between 1) the value created for the user and the broadcaster/operator (e.g., the value forged by lowering energy consumption) and 2) the value of a motivating reward for users.

The readiness and willingness of users to accept some changes in their TV usage and corresponding actions may create the value. A reward may create a motivation for the users to perform such actions (e.g., for having an appropriate mindset and for changing some habits).

An algorithm strength (e.g., corresponding to a fine and continuous manner of controlling the strength of any algorithm) may be illustrative of the quality of the output content. The algorithm strength may be linked (e.g., directly linked) with the amount of energy consumption (or reduction) of the algorithm. A link with the amount of energy saved may not be (e.g., may not necessarily be) explicit and clear to the end users. Accordingly, the link with the amount of energy saved may not encourage (e.g., be the best way to encourage) users to lower the quality of the output content (e.g., and consequently their energy consumption).

Information regarding carbon emission caused by consumption of content may be generated. For example, a carbon intensity associated with a device displaying a video segment of content received from a content provider may be determined. Information indicative of energy spent by the device to display the video segment may be recorded. An emission report may be generated based on the determined carbon intensity and the recorded information. The emission report may be transmitted (e.g., to the provider).

Information comprising understandable feedback related to quality choice may be displayed to users (e.g., in the form of indicators). For example, the user may have access to (e.g., an explicit view of) the value of some understandable indicators of benefits (e.g., direct benefits for their health, direct economic benefits, direct reduction in terms of pollution levels, direct indication on the protection of the biodiversity, direct indication on the preservation of the amount of raw materials, and/or benefit in terms of social recognition) that would result from an action/decision of the users to reduce the quality of the content consumed.

The link between quality reduction and the other comprehensible indicators may be accessible (e.g., in a fine and continuous manner). This may allow users to precisely control the level of quality in relation to the level of benefit (e.g., shown by the indicators).

Energy Credit may be referred to as a service concept. Energy Credit may be used as a credit limit used by the operator network's credit control.

Energy credit may refer to a service concept used as an abstract measure of the energy impact on the network of delivering a service to a device (e.g., a wireless transmit/receive unit (WTRU), such as user equipment (UE)). The 5G system may (e.g., subject to the operator's policies) support a mechanism to perform energy consumption credit limit control for services without quality of service (QoS) condition(s). Energy credits (e.g., associated to a subscriber and used by the operator network's credit control) may be consumed depending on the device behavior (e.g., based on the data volume time, location, and/or the amount of energy consumed by the network to provide the service).

Energy Credit may be used to count the amount of energy already consumed by a user while using a service or a pool of services.

An account (e.g., a local or remote file, record, or database) may store values representative of energy savings (e.g., credits or Saved Watts). For example, the energy savings credits may be gained by a user dimming a TV set (e.g., directly or indirectly, for example, by dimming the room) to reduce energy consumption of, for example, the TV set. The values may indicate an amount of 'Saved Watts' (e.g., to be stored in an account for future use).

The broadcaster or operator may receive a (e.g., direct) benefit of energy reduction by users (e.g., contributing to their Scope 3 reporting).

Energy saving video processing algorithms may be used. Users may be rewarded for switching off the TV set and suspending its usage.

The TV set may be used in a dim light mode. The dim light mode may reduce the ambient light level in the room where the TV set is located. In the dim light mode, the device may lower its emitted light level and energy consumption (e.g., for the majority of TV models and usual TV set settings). The user may (e.g., deliberately) dim their TV set to save energy. The user may also (e.g., deliberately) decrease the room illumination to indirectly dim their TV set.

The dimming may be monitored. The saved energy (e.g., from dimming) may be evaluated. The saved energy may be compared with a reference. The saved energy may be used to credit a Saved Watts account (e.g., managed by the broadcaster operator or a partner). The Saved Watts account may be attached to the user and/or the device and/or a group of users.

The user may receive tangible benefits based on the saved energy. This may motivate the user to use tools for energy reduction. The user may be encouraged to reduce the emitted light level of their device.

Saved Watts may be acquired through dimming the display (e.g., TV set).

For energy aware image processing, the objective may be to minimize the energy consumption of visual media presentation or display (e.g., on TV sets or on mobile displays). Although examples provided herein may be described with respect to a television or TV, a person of ordinary skill in the art will appreciate that the examples may be extended to other displays (e.g., mobile display, AR or VR sets, etc.).

Energy consumption reduction may be improved (e.g., performed) by rewarding users if they dim their display (e.g., directly or indirectly). For example, the user may change the brightness setting on their device. In another example, if the display has an automatic brightness adjustment feature, the user may dim or adjust the brightness of the display by dimming the light in the room where the display is located (e.g., the display will dim automatically based on the ambient light).

The energy savings efforts may be converted into Saved Watts. The Saved Watts may be stored for later use. For example, the user may use the Saved Watts to obtain tangible media/video rewards (e.g., purchased with these energy saving credits).

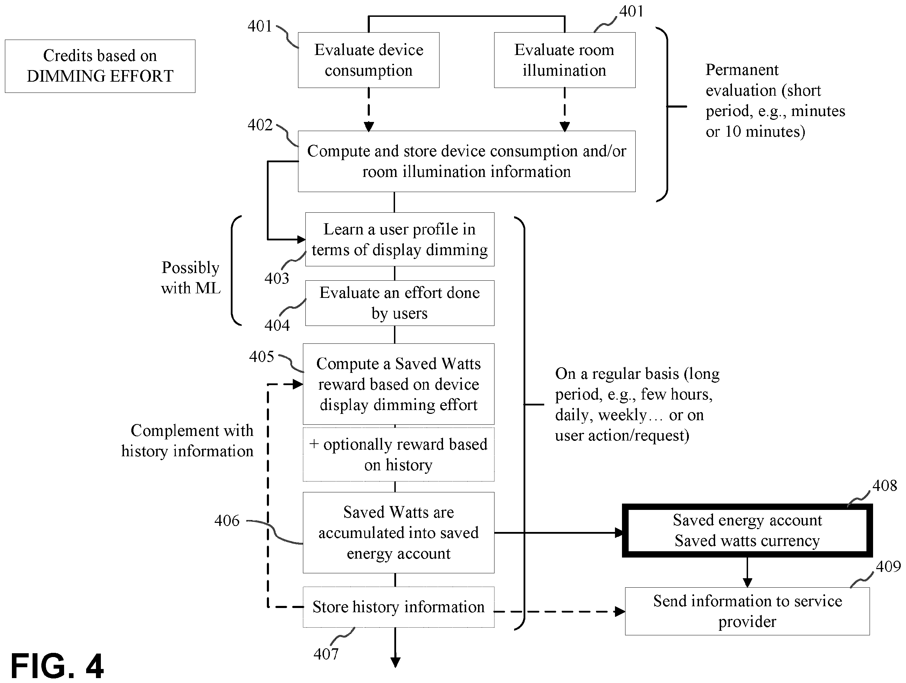

FIG. 4 illustrates an example technique for determining and storing Saved Watts. One or more of the following actions may be performed (e.g., repeated cyclically, for example, with a period of a few minutes, such as 10 minutes).

At 401, the device may monitor and/or evaluate device consumption, or device dimming (e.g., through the device's level of brightness and/or room illumination).

At 402, the device may compute and store the device consumption, or device dimming (e.g., through the device's level of brightness and/or room illumination information).

One or more of the following actions may be performed (e.g., repeated cyclically with a longer period, for example, a few hours, daily, weekly, or based on user action/request, or based on an automated process).

At 403, the device may learn a user profile for the display (e.g., in terms of display dimming, device consumption, and/or room illumination). For example, the user profile may be learned using artificial intelligence/machine learning (AI/ML). Before a first user profile is learned, a default (e.g., average) profile may be used.

The user profile may be updated (e.g., depending on the collected data and its evolution). For example, Al/ML techniques may be used to infer the effort done by a user to change his habits towards dimming the display (e.g., through monitoring user activity associated with device consumption, device brightness, room illumination, and energy savings). Al/ML techniques may be used to infer how the user profile can be built and/or updated based on detected changes in the user's behavior (e.g., in terms of device consumption, device brightness, room illumination, and energy savings). In examples, explicit and/or deterministic rules may be implemented to update the user profile (e.g., the average level of brightness of a device has been below a determined threshold for a given duration). Threshold and/or duration values may evolve over time, according to predefined values, or after an (e.g., each) update of the user profile.

At 404, the device may evaluate the user's efforts. For example, the device may compare display dimming and room illumination profiles over time (e.g., over days). For example, the device may compute the number of times an illumination variation event occurred. Illumination variation events may include closing the curtains or the shades, switching off lamps, and/or the like. The illumination variation events may be detected by a sensor of the TV set or an ancillary sensor connected to the TV or online. The device may track and/or evaluate actions by the user that affect the brightness level of the TV. AI/ML may be used to perform one or more of these actions to evaluate the user's efforts.

At 405, the device may convert the collected data to Saved Watts. The Saved Watts may be accumulated into saved energy account.

The conversion of the dimming effort to Saved Watts may involve formulas or heuristics. The formulas or heuristics may be defined by the Saved Watts account manager (e.g., the broadcaster, operator, or a subsidiary).

The conversion may compute an evaluation of the saved energy resulting from dimming.

A history of Saved Watts stored may be used (e.g., to valorize significant efforts or to reward a regular attention to energy saving).

At 406, Saved Watts may be accumulated into saved energy account (e.g., which may be stored in the device at the client side, and/or at the server side).

This may involve communicating with a local or remote storage device (e.g., using an API and/or a defined protocol). SEI messages and/or similar/equivalent means may be used for this communication.

At 407, history information may be stored (e.g., to be used at 405). History information may be sent to the service provider. History information may be used to re-evaluate the user profile and update the number of Saved Watts.

At 408, the Saved Watts currently may be sent to (and stored in) a saved energy account.

At 409, saved energy account information, status information, and/or history information may be sent to the service provider. This communication may be supported by SEI messages and/or similar/equivalent means.

Saved Watts may be accounted for in a streaming use case. In this case, the user may request a preprocessed content version meant to reduce energy consumption. The number of Saved Watts may be transmitted as metadata with the reduced energy content (e.g., in order to be correctly accounted for). The number of Saved Watts may be estimated by measuring the actual power savings while watching the streamed content (e.g., as described herein). If the energy saved amount or the Saved Watts amount is sent as metadata, the saved energy for the whole video chain (e.g., storage, encoding, transmission, decoding, display, etc.) for the energy-aware content (e.g., and not only the display part) may be accounted for. This may credit the user for more Saved Watts.

At 405, the actions may be supported by SEI messages and/or similar or equivalent means to the broadcaster/operator to inform the broadcaster/operator about the Saved Energy account status.

In examples, negative Saved Watts may be added to the user account (e.g., if the user increases the energy consumption of the screen, for example, by increasing the brightness of the screen).

In examples, the number of Saved Watts may be computed depending on the user's effort. For example, Saved Watts may be computed based on the level of dimming applied to the screen and/or depending on the duration of the effort in time (e.g., the duration of the dimming level and the duration since the change of user profile, towards a more sustainable behavior).

The users and the broadcaster (or operator) may be incentivized to count saved Watts (e.g., from dimming the TV screens) to reduce the energy consumption of displays. The users may be rewarded if they spend their savings (e.g., Saved Watts). The broadcaster (or operator) may manage these savings and claim them in their Scope 3 reporting.

The availability of an account of Saved Watts for a display may influence the choices of a user (e.g., to further dim their TV screens). The account may give the user a clearer view of the consequences of their choices and the motivation of being rewarded (e.g., consequently lowering their energy consumption and their GHG emissions).

Feature(s) described herein may be used in video coding/decoding, distribution, rendering, and/or consumption. The efforts from a user may save energy, for which they are rewarded. Companies involved in the video chain may accumulate credits (e.g., Scope 3 credits) via the user's efforts. These Scope 3 credits (or similar mechanisms) may reward these companies for virtuously providing the means (and motivating the users) to save energy.

The level of dimming of the TV (e.g., and its evolution based on user actions) may be recorded. The evolution of the dimming level in time towards a decrease may be easily detectable.

Accounting Saved Watts and activating the reward may be recorded (e.g., because there is interaction with the user).

The broadcaster/operator may detect the signaling messages available to the display to control the energy reduction processing and/or the quality of the processing. The interaction with the user account and rewards may be detected.

Systems, methods, and instrumentalities are disclosed herein for energy savings credits based on display dimming.

An example device for video decoding may determine that a user of a display has caused the display to dim. The device may calculate an amount of energy saved by dimming the display. The device may determine an energy savings credit based on the amount of energy saved by dimming the display. The device may store the energy savings credit in an account associated with the user.

The device may determine that the user has lowered a brightness setting of the display. The display may include an automatic dimming system. The device may determine that the automatic dimming system is enabled and the user has reduced ambient light around the display.

The device may monitor user activity that affects brightness of the display. The device may determine a user profile associated with dimming the display based on the user activity that affects the brightness of the display.

The device may determine a default user profile. The device may monitor user activity that affects brightness of the display. The device may modify the default user profile associated with dimming the display based on the user activity that affects the brightness of the display.

The device may receive data associated with user activity that affects brightness of the display. The device may determine an evolution of the user activity that affects brightness of the display. The device may update a user profile based on the evolution of the user activity that affects brightness of the display.

The device may receive first data associated with display dimming and room illumination at a first time. The device may receive second data associated with display dimming and room illumination at a second time. The device may compare the first data and the second data to evaluate user energy saving effort. The device may determine the energy savings credit further based on the user energy saving effort.

The device may store historical information indicative of a total amount of energy saved by dimming the display over time. The device may send the historical information to a service provider.

The device may receive a request from the user for reduced energy media content. The device may retrieve the reduced energy media content to present on the display. The reduced energy media content may include metadata indicative of an amount of energy saved by using the reduced energy media content. The device may determine the energy savings credit further based on the amount of energy saved by using the reduced energy media content.

The device may calculate the amount of energy saved by dimming the display by determining a difference between a reference number of watts that would be used by the display while at a first brightness prior to dimming the display and a number of watts used by the display while at a second, lower brightness after dimming the display.

The device may receive a request from the user to exchange the energy savings credit for media content. The device may subtract the energy savings credit from the account associated with the user. The device may grant the user access to the media content.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. HTTP live Streaming (HLS) manifest transmitted over HTTP.
iii. DASH MPD descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device comprising:
a processor configured to:
determine that a user of a display has caused the display to dim;
calculate an amount of energy saved by dimming the display;
determine an energy savings credit based on the amount of energy saved by dimming the display; and
store the energy savings credit in an account associated with the user.

2. The device of claim 1, wherein the processor being configured to determine that the user of the display has caused the display to dim comprises the processor being configured to determine that the user has lowered a brightness setting of the display.

3. The device of claim 1, wherein the display comprises an automatic dimming system, and the processor being configured to determine that the user of the display has caused the display to dim comprises the processor being configured to determine that the automatic dimming system is enabled and the user has reduced ambient light around the display.

4. The device of any of claims 1 to 3, wherein the processor is further configured to:
monitor user activity that affects brightness of the display; and
determine a user profile associated with dimming the display based on the user activity that affects the brightness of the display.

5. The device of any of claims 1 to 3, wherein the processor is further configured to:
determine a default user profile;
monitor user activity that affects brightness of the display; and
modify the default user profile associated with dimming the display based on the user activity that affects the brightness of the display.

6. The device of any of claims 1 to 5, wherein the processor is further configured to:
receive data associated with user activity that affects brightness of the display;
determine an evolution of the user activity that affects brightness of the display; and
update a user profile based on the evolution of the user activity that affects brightness of the display.

7. The device of any of claims 1 to 6, wherein the processor is further configured to:
receive first data associated with display dimming and room illumination at a first time;
receive second data associated with display dimming and room illumination at a second time; and
compare the first data and the second data to evaluate user energy saving effort, wherein the processor being configured to determine the energy savings credit comprises the processor being configured to determine the energy savings credit further based on the user energy saving effort.

8. The device of any of claims 1 to 7, wherein the processor is further configured to:
store historical information indicative of a total amount of energy saved by dimming the display over time; and
send the historical information to a service provider.

9. The device of any of claims 1 to 8, wherein the processor is further configured to:
receive a request from the user for reduced energy media content; and
retrieve the reduced energy media content to present on the display, wherein the reduced energy media content comprises metadata indicative of an amount of energy saved by using the reduced energy media content, and wherein determining the energy savings credit is further based on the amount of energy saved by using the reduced energy media content.

10. The device of any of claims 1 to 9, wherein the processor being configured to calculate the amount of energy saved by dimming the display comprises the processor being configured to determine a difference between a reference number of watts that would be used by the display while at a first brightness prior to dimming the display and a number of watts used by the display while at a second, lower brightness after dimming the display.

11. The device of claim 1, wherein the processor is further configured to:
receive a request from the user to exchange the energy savings credit for media content;
subtract the energy savings credit from the account associated with the user; and
grant the user access to the media content.

12. A method comprising:
determining that a user of a display has caused the display to dim;
calculating an amount of energy saved by dimming the display;
determining an energy savings credit based on the amount of energy saved by dimming the display; and
storing the energy savings credit in an account associated with the user.

13. The method of claim 12, wherein determining that the user of the display has caused the display to dim comprises determining that the user has lowered a brightness setting of the display.

14. The method of claim 12, wherein the display comprises an automatic dimming system, and determining that the user of the display has caused the display to dim comprises determining that the automatic dimming system is enabled and the user has reduced ambient light around the display.

15. The method of any of claims 12 to 14, wherein the method further comprises:
monitoring user activity that affects brightness of the display; and
determining a user profile associated with dimming the display based on the user activity that affects the brightness of the display.
